# EUROPÄISCHE PATENTSCHRIFT

(11) **EP 2 063 301 B1**
(45) Veröffentlichungstag und Bekanntmachung des Hinweises auf die Patenterteilung: **12.10.2011**
(21) Anmeldenummer: 07022699.8
(22) Anmeldetag: 22.11.2007
(51) Int. Cl.: G02B 6/38

(54) **Anschlussteil für mindestens eine optische Faser**
Connecting part for a minimum of one optical fibre
Elément de raccordement pour au moins une fibre optique

(43) Veröffentlichungstag der Anmeldung: 27.05.2009
(73) Patentinhaber: Firma Pepperl + Fuchs GmbH, 68307 Mannheim (DE)
(72) Erfinder: Wünsche, Tilo, 14482 Potsdam (DE); Satzky, Uwe, 22455 Hamburg (DE); Marschner, Tobias, 10179 Berlin (DE); Günther, Uwe, 13129 Berlin (DE); Tabel, Ernst, 22337 Hamburg (DE)
(74) Vertreter: Schiffer, Axel Martin

(56) Entgegenhaltungen:
- DE-U1- 8 908 899
- FR-A- 2 823 859
- US-A1- 2001 055 449

## Beschreibung

Die vorliegende Erfindung betrifft ein Anschlussteil für mindestens eine optische Faser nach dem Oberbegriff des Anspruchs 1.

Ein bekanntes Anschlussteil für eine optische Faser weist einen Ummantelungskörper auf, in welchem ein Endbereich einer optischen Faser oder Endbereiche mehrere optischer Fasern aufnehmbar sind.

Solche Anschlussteile, die auch als Ferrulen bezeichnet werden, weisen üblicherweise eine Hülsenform auf und werden bei einer Vielzahl von Anwendungen im optoelektronischen Bereich eingesetzt. Insbesondere werden solche Komponenten benutzt, um eine optische Faser, in welche Licht eingekoppelt oder aus der Licht ausgekoppelt werden soll, relativ zu den entsprechenden Anschlussstücken, beispielsweise also relativ zu einem Laserchip, zu positionieren.

In bisher bekannte Ferrulen, die die Form einer einfachen Hülse aufweisen, wird die optische Faser eingeführt und dort üblicherweise mit Klebstoff fixiert. Bei der Herstellung der bekannten Anschlussteile werden demnach äußerst kleine und dabei präzise Bohrungen benötigt. Um das Einführen des Faserendes zu erleichtern, werden die Bohrungen mit einem größeren Durchmesser als der Glasfaserdurchmesser gefertigt, um die Faserenden ieichier einführen zu können. Normalerweise eignen sich die bekannten Ferrulen jeweils nur für die Aufnahme von einzelnen runden Glasfasern. Wenn zwei Glasfasern aufgenommen werden sollen, ist deshalb eine zusätzliche mechanische Führung notwendig, um die Fasern zueinander zu fixieren, was im Hinblick auf die Handhabung schwierig ist. Weiterhin ist auch das Schleifen und Polieren von in Metall gefassten Glasfasern aufwändig.

Insgesamt ist deshalb der Aufwand für das Fertigen und Anbringen der Ferrulen oder Anschlusstelle an die Faserenden der optischen Fasern hoch und mit entsprechenden Ungenauigkeiten und Kosten verbunden.

Gattungsgemäße Ferrulen sind aus US 2001/00 55 449 A1 bekannt und eine Positionierungsvorrichtung für optische Fasern wird in FR 2 823 859 A1 beschrieben.

Ein Kalibrierstecker für einen faseroptischen Lichtwellenleiter ist aus G 89 08 899.9 bekannt. Der Kalibrierstecker umfasst zwei Halbschalen, in denen jeweils Führungsnuten zur Aufnahme des Lichtwellenleiters vorgesehen sind.

Eine **Aufgabe** der Erfindung ist es, ein Anschlussteil zu schaffen, welches eine rasche, zuverlässige, definierte und präzise Montage an einer optischen Faser oder an mehreren optischen Fasern gestattet.

Diese Aufgabe wird durch das Anschlussteil mit den Merkmalen des Anspruchs 1 gelöst.

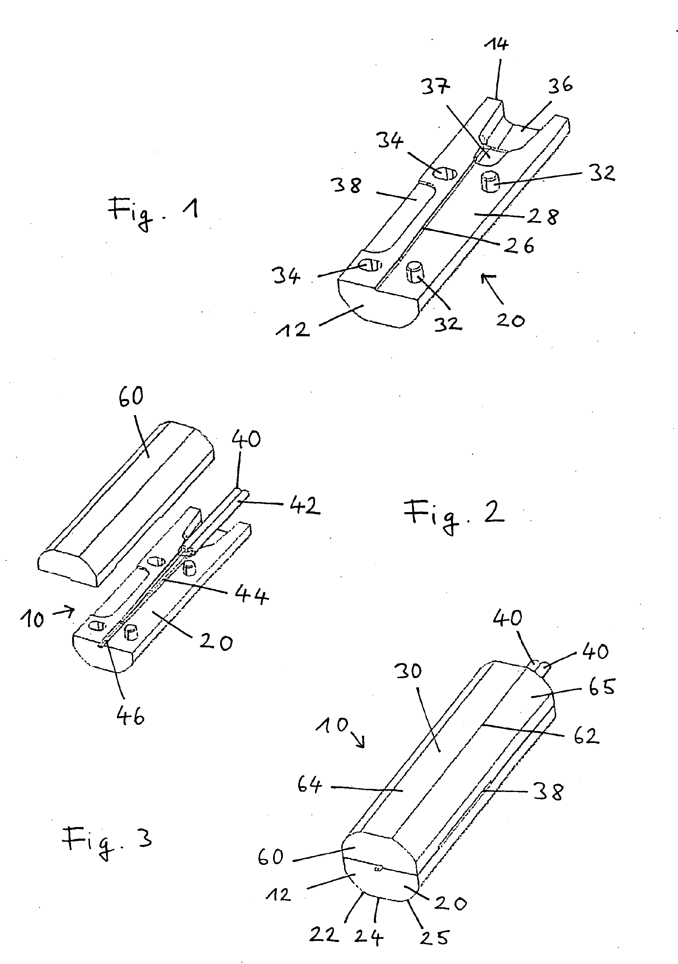

Bevorzugte Ausgestaltungen des erfindungsgemäßen Anschlussteils sind Gegenstand der Unteransprüche und darüber hinaus im folgenden Beschreibungstext und im Zusammenhang mit den Figuren 1-5 beschrieben.

Bei dem Anschlussteil ist vorgesehen, dass der Ummantelungskörper mehrteilig gebildet ist, dass der Ummantelungskörper zumindest ein Führungsstück mit einem Anschlag und ein Gegenstück aufweist und dass der Endbereich der optischen Faser oder die Endbereiche der optischen Fasern im zusammengebauten Zustand des Ummantelungskörpers mit dem Gegenstück relativ zum Führungsstück in definierter Position fixierbar sind.

Bei den Vorarbeiten, die zur Erfindung führten, wurde erkannt, dass bereits äußerst geringe Fehlpositionierungen der optischen Faser zu einem Laserchip bereits zu erheblichen Abschwächungen der in die Faser eingekoppelten Leistung führen. Schädlich sind hierbei sowohl Fehlpositionierungen, bei denen die Achse der optischen Faser zur richtigen Position parallel verschoben ist, als auch solche, bei denen die Achse der optischen Faser relativ zur richtigen Position verkippt ist.

Bei den bekannten Ferrulen bestehen gerade gegenüber Verschiebung und Verkippung erhebliche Freiheitsgrade, da man die Bohrung, um ein Einführen der optischen Faser überhaupt zu ermöglichen, deutlich größer wählt als den Faserdurchmesser.

Es wurde bei den Vorarbeiten zur Erfindung weiterhin erkannt, dass eine wesentliche Schwierigkeit bei den bisher eingesetzten Ferrulen in den Ungenauigkeiten und Fehlpositionierungen zu sehen ist, welche sich beim Verkleben der optischen Fasern in der Ferrule ergeben.

Als erster Kerngedanke der Erfindung kann angesehen werden, den Ummantelungskörper, welcher im Stand der Technik durch die Ferrule selbst gebildet ist, zweiteilig, aus zwei Hälften oder Halbschalen, zu bilden. Ein schwieriges Einführen der optischen Faser in eine kleine Bohrung kann somit entfallen.

Als zweiter Kerngedanke der Erfindung kann angesehen werden, dass im Unterschied zum Stand der Technik im Inneren des Ummantelungskörpers eine Führung in Form eines Anschlags vorgesehen ist, so dass in einfacher Weise eine deutlich präzisere Positionierung erzielt wird.

Ein wesentlicher Vorteil des erfindungsgemäßen Anschlussteils ist deshalb das deutlich vereinfachte Anbringen dieses Anschlussteils an dem Faserende einer optischen Faser. Da dies außerdem im Vergleich zum Stand der Technik in kürzerer Zeit erreicht wird, ergeben sich erhebliche Kostenvorteile.

Darüber hinaus ist im Vergleich zum Stand der Technik eine präzisere Positionierung möglich, so dass die Erfindung auch erhebliche technische und Funktionsvorteile beinhaltet. So ist durch die Verwendung eines mehrteiligen Ummantelungskörpers eine Bohrung nicht mehr notwendig. Weiterhin können sowohl einzelne als auch mehrere, beispielsweise zwei Glasfasern, insbesondere parallel zueinander, sicher und positionsgenau gehalten werden.

Weiterhin wird durch die Verwendung von zwei Ferrulen-Halbschalen ein einfaches, eindeutiges, sicheres und kostengünstiges Konfektionieren von Glasfasern ermöglicht. Ein besonders wichtiger Vorteil der Erfindung ist, dass die Lage der optischen Fasern oder Glasfaser bezüglich der Außengeometrie des Anschlussteils präzise festgelegt ist und grundsätzlich bei allen gleichartig geformten Anschlussteilen gleich ist.

Die Glasfasern sind weiterhin ohne besondere Justage und ohne zusätzliche Hilfsmittel relativ zum Anschlussteil genau positionierbar.

Bei dem erfindungsgemäßen Anschlussteil handelt es sich demnach um eine Art Fassung für-optische Fasern, welche ihrerseits in grundsätzlich bekannter Weise an weitere Komponenten gekoppelt werden kann.

Im Wesentlichen wird demgemäß bei dem erfindungsgemäßen Anschlussteil im zusammengebauten Zustand des Ummantelungskörpers durch den Anschlag des Führungsstücks und das Gegenstück ein längliches Führungsvolumen begrenzt, in dem eine optische Faser oder mehrere optische Fasern aufgenommen und präzise positioniert werden. Beispielsweise wird die optische Faser oder werden die optischen Fasern in diesem Führungsvolumen jedenfalls in einem Teilbereich praktisch formschlüssig gehalten und dort eingeklemmt.

Besonders zweckmäßig ist es, wenn die Faserenden im Bereich einer Stirnseite zwischen dem Führungsstück und dem Gegenstück in definierter Position gehalten oder geklemmt werden.

Bei dem Anschlussteil ist auch an dem Gegenstück ein Anschlag gebildet. Durch simples Einklemmen der optischen Fasern zwischen Führungsstück und Gegenstück kann dann eine präzise Positionierung erzielt werden.

Eine einfache Realisierung des erfindungsgemäßen Anschlussteils sieht vor, dass der Anschlag des Führungsstücks und der Anschlag des Gegenstücks stufenförmig gebildet sind. Die optische Faser wird dann im zusammengebauten Zustand des Ummantelungskörpers zwischen den beiden Stufen in definierter Position gehalten.

Grundsätzlich gemäß eines Ausführungsbeispiels das kein Teil der Erfindung ist, könnte der Anschlag des Führungsstücks und/oder der Anschlag des Gegenstücks nutförmig gebildet sein. Hierbei würde eine besonders gut definierte Positionierung der optischen Faser erreicht, wobei prinzipiell nur dafür gesorgt werden müsste, dass die optische Faser durch das Gegenstück in der Nut gehalten wird. Dies kann beispielsweise durch ein sehr einfaches plattenförmiges Gegenstück erreicht werden.

Zweckmäßig entspricht eine Höhe eines stufenförmigen Anschlags oder gemäß eines Ausführungsbeispiels das kein Teil der Erfindung ist, eine Tiefe eines nutförmigen Anschlags etwa einer Dicke des Endbereichs der optischen Faser. Die Höhe des stufenförmigen Anschlags ist geringförmig kleiner als die Dicke der optischen Faser, so dass der Endbereich der optischen Faser stramm zwischen dem Führungsstück und dem Gegenstück sitzt.

Das Führungsstück und das Gegenstück können auf grundsätzlich beliebige Art und Weise miteinander verbunden werden. Beispielsweise kann für einfache Varianten eine Rastverbindung vorgesehen sein.

Bei bevorzugten Ausgestaltungen des erfindungsgemäßen Anschlussteils werden das Führungsstück und das Gegenstück jedoch miteinander verklebt.

Für die präzise Positionierung der optischen Faser ist es wichtig, dass das Führungsstück und das Gegenstück relativ zueinander genau ausgerichtet werden. Dies wird erleichtert, wenn das Führungsstück und das Gegenstück Fixiermittel zum wechselseitigen Fixieren aufweisen.

Bei einer einfachen Ausgestaltung können die Fixiermittel beispielsweise Mittel zum wechselseitigen mindestens teilweise formschlüssigen Eingriff sein und beispielsweise als Zapfen und korrespondierende Sacklöcher gebildet sein.

Das Führungsstück und das Gegenstück sind identische Bauteile. Beispielsweise weist also das Führungsstück zwei Zapfen und zwei Sacklöcher auf, die mit den entsprechenden Teilen des Gegenstücks, also der zweiten Halbschale, im zusammengebauten Zustand in Eingriff kommen.

Ein wesentlicher Vorteil hierbei ist außerdem, dass nur ein einziges Teil auf Lager gehalten werden muss und auch die Montage gestaltet sich einfacher, da keine Verwechslung von Teilen möglich ist.

Das Führungsstück und das Gegenstück können grundsätzlich aus Metall gebildet sein. Für die meisten Anwendungen ist im Hinblick auf die erreichbare Genauigkeit jedoch ausreichend, wenn das Führungsstück und das Gegenstück aus Kunststoff gebildet ist. det ist.

Ein besonderer Vorteil wird erreicht, wenn das Führungsstück und das Gegenstück aus transparentem oder transluzentem Kunststoff gebildet ist. Der verwendete Klebstoff kann dann mit Licht, zum Beispiel mit UV-Licht innerhalb weniger Sekunden ausgehärtet werden. Die Fertigung, also das Anbringen der Ferrulen-Halbschalen an einem Glasfaserende kann dadurch beschleunigt werden. Beispielsweise können die Ferrulen-Halbschalen aus MABS, also aus Methylmethacrylat-Acrylnitril-Butadien-Styrol-Copolymer, gefertigt werden.

Für sehr einfache Ausgestaltungen kann auch vorgesehen sein, die Ferrulen-Halbschalen, also das Führungsstück und das Gegenstück miteinander zu verrasten, wobei auch hier die Enden der optischen Fasern geklemmt werden.

Zweckmäßig ist weiterhin, wenn sich das Führungsvolumen in Richtung einer Stirnseite des Ummantelungskörpers verjüngt. Bevorzugt verläuft das Führungsvolumen aber jedenfalls in einem kurzen Bereich vor der Stirnseite senkrecht zur Stirnseite. Dadurch kann eine definierte Positionierung des Faserendes erzielt werden. Die innere Umhüllung einer zu halternden optischen Faser muss, wenn sich das Führungsvolumen in Richtung einer Stirnseite des Ummantelungskörpers verjüngt, nicht im gesamten im Anschlussteil befindlichen Bereich abgenommen werden, sondern kann jedenfalls teilweise an der optischen Faser verbleiben. Die Gefahr eines Brechens des Faserendes beim Anbringen des Anschlussteils kann so reduziert werden.

In dieser Hinsicht ist es außerdem vorteilhaft, wenn das Führungsstück und das Gegenstück an einer Abgangsseite einen Aufnahmebereich zum Aufnehmen von Klebstoff und oder eines Knickschutzes für die optische Faser oder die optischen Fasern aufweisen.

Zum Verbessern der Klebeverbindung zwischen den Ferrulen-Halbschalen kann außerdem auf einer Innenseite des Führungsstücks und des Gegenstücks zum Aufnehmen von Klebstoff mindestens eine Tasche gebildet sein.

Wichtig für das Anordnen des Anschlussteils mit einer darin befindlichen optischen Faser bezüglich weiterer Komponenten, beispielsweise einem Laserchip, ist, dass die Position der optischen Faser bezüglich des Anschlussteils möglichst gut definiert und bekannt ist. Zweckmäßig sind deshalb an einer Außenseite des Führungsstücks und des Gegenstücks Konturierungen gebildet. Hierbei kann es sich beispielsweise um, insbesondere lineare, Kanten oder Flächen handeln.

Eine besonders einfache Zuordnung der Position der optischen Faser bezüglich der Außenkontur des Anschlussteils, also der Konturierung des Führungsstücks und des Gegenstücks, ist möglich, wenn mindestens eine Kante der Konturierung so gebildet ist, dass die optische Faser oder die optischen Fasern im zusammengebauten Zustand zumindest im Bereich der Stirnseite des Anschlussteils parallel zur Kante liegt bzw. liegen.

Besonders zweckmäßig weist eine Außenkontur des Ummantelungskörpers deshalb eine Zylinderform auf. Die Grundfläche dieses Zylinders kann beispielsweise im Wesentlichen eine achteckige Form aufweisen.

Das erfindungsgemäße Anschlussteil ist grundsätzlich zur Aufnahme auch einer größeren Zahl von optischen Fasern geeignet. Bei besonders bevorzugten Ausführungsbeispielen ist das Anschlussteil aber zur Aufnahme von genau einer optischen Faser oder zur Aufnahme von genau zwei optischen Fasern ausgelegt. Grundsätzlich kann bei einer größeren Fläche eines Laserchips aber auch eine größere Anzahl von einzelnen optischen Fasern mit Hilfe eines erfindungsgemäßen Anschlussteils gegenüber einem solchen Laserchip in einfacher Weise positioniert werden.

Weitere Vorteile und Merkmale der Erfindung werden nachstehend mit Bezug auf die schematischen Figuren beschrieben.

Hierin zeigt
- Figur 1:: ein Führungsstück eines ersten Ausführungsbeispiels des erfindungsge- mäßen Anschtussteils;
- Figur 2:: das Führungsstück aus Figur 1 mit zwei eingelegten optischen Fasern sowie dem dazugehörigen Gegenstück;
- Figur 3:: das Führungsstück mit dem Gegenstück aus Figur 2 im zusammengebau- ten Zustand;
- Figur 4:: eine Stirnseite des Führungsstücks und des Gegenstücks aus den Figuren 2 und 3 vor dem Zusammenschieben in den endgültigen Zustand;
- Figur 5:: die in Figur 4 gezeigten Stirnseiten des Führungsstücks und des Gegen- stücks im endgültigen zusammengebauten Zustand mit zwei optischen Fasern;
- Figur 6:: ein Führungsstück eines Ausführungsbeispiels das kein Teil der Erfindung ist. ;
- Figur 7:: das Führungsstück aus Figur 6 mit zwei eingelegten optischen Fasern sowie dem dazugehörigen Gegenstück; und
- Figur 8:: das Führungsstück mit dem Gegenstück aus Figur 7 im zusammengebau- ten Zustand mit zwei gehalterten optischen Fasern.

Ein erstes Ausführungsbeispiel eines erfindungsgemäßen Anschlussteils 10 wird mit Bezug auf die Figuren 1 bis 5 beschrieben. Äquivalente Komponenten sind in allen Figuren mit denselben Bezugszeichen versehen.

Das in den Figuren 1 bis 3 gezeigte Anschlussteil 10 weist als wesentliche Bestandteile ein Führungsstück 20 und ein Gegenstück 60 auf, durch welche ein Ummantelungskörper 30 gebildet wird. Im gezeigten Beispiel handelt es sich hierbei um gleichartige Komponenten, die jeweils aus dem transparenten, thermoplastischen Kunststoff MABS gefertigt sind.

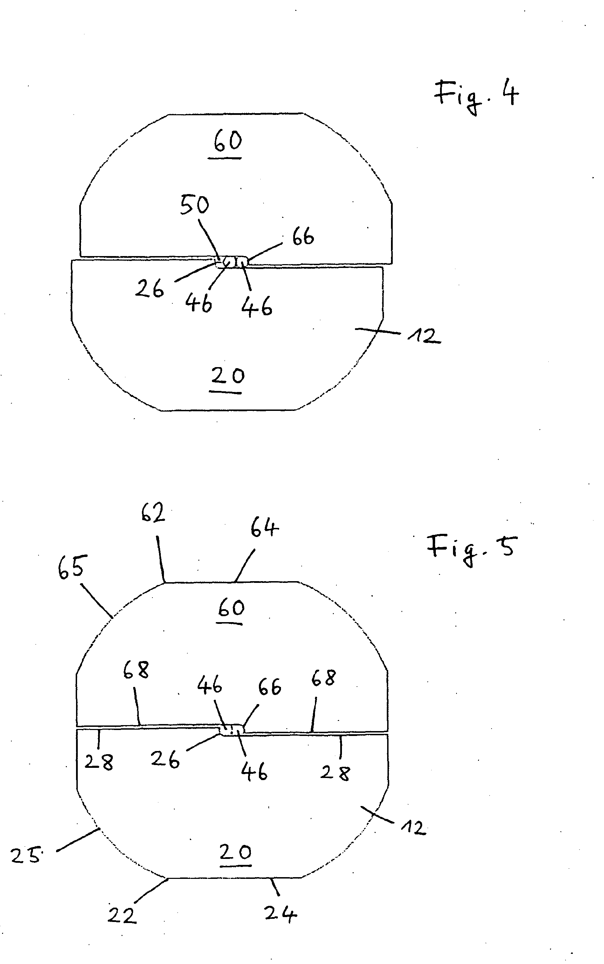

Wie aus Fig. 3 ersichtlich, hat das Anschlussteil 10 im Wesentlichen die Form eines an vier Außenseiten abgeflachten Kreiszylinders. Dementsprechend weist eine Außenkontur des Anschlussteils 10 jeweils abwechselnd ebene Flächen 24, 64, Kanten 22, 62 sowie abgerundete oder gekrümmte Flächen 25, 65 auf, siehe auch Fig. 5. Die Grundfläche des Zylinders entspricht demgemäß im Wesentlichen der Form eines Achtecks. Bedeutsam an dieser Formgebung ist unter praktischen Gesichtspunkten, dass die von dem Anschlussteil 10 aufgenommenen optischen Fasern in einer gut definierten Lage relativ zur Außenkontur positioniert sind. Im gezeigten Ausführungsbeispiel sind zwischen dem Führungsstück 20 und dem Gegenstück 60 zwei optische Fasern 40 in einer zu den Kanten 62 der Außenkontur im Wesentlichen parallelen Lage aufgenommen. Außerdem liegen die Endbereiche 46 der optischen Fasern 40 senkrecht zu einer Stirnfläche 12 des durch das Führungsstück 20 und das Gegenstück 60 gebildeten Ummantelungskörpers 30.

Die optischen Fasern 40 können mit Hilfe des erfindungsgemäßen Anschlussteils 10 besonders leicht und präzise positioniert werden. Durch die spezielle Geometrie des Ummantelungskörpers 30 kann in vorteilhafter Weise von der Außengeometrie auf die Lage der gekoppelten Glasfasern 40 geschlossen werden, das heißt die Lage der Glasfasern ist von außen erkennbar. Durch den Einsatz von Kunststoff können die Ferrulen-Halbschalen kostengünstig durch Spritzgusstechnik hergestellt werden. Weiterhin wird durch den Einsatz von Kunststoff der abschließende Schleifprozess, bei dem die Stirnseite 12 und ein eventuell überstehender Endbereich 46 einer optischen Faser abgeschliffen wird, deutlich vereinfacht. Besonders bevorzugt wird Kunststoff verwendet, der für UV-Licht durchlässig ist. Es können dann Kleber verwendet werden, die mit UV-Licht ausgehärtet werden können. Dadurch kann der Klebeprozess deutlich verkürzt und in seiner Qualität verbessert werden.

Im Vergleich zur bisher üblichen Methode zur Konfektionierung von optischen Fasern, bei der gebohrte Metallhülsen verwendet wurden, wird durch die Erfindung eine deutliche Vereinfachung bei der Konfektionierung von Glasfasern erreicht, wobei insbesondere die genaue und von außen erkennbare Positionierung, beispielsweise von zwei parallelen Glasfasern, ein erheblicher Vorteil ist. Im Stand der Technik war eben diese Lage der Glasfaser zur Außengeometrie nicht genau festgelegt und hieraus resultierte in der Praxis ein erheblicher Ungenauigkeits- und Verlustfaktor.

Die erfindungsgemäßen Anschlussteile können besonders vorteilhaft bei optischen Entfernungsmessgeräten eingesetzt werden, insbesondere bei Entfernungsmessgeräten, bei denen eine Lichtlaufzeit gemessen wird.

Details des Führungsstücks 20 und des Gegenstücks 60, die auch als Ferrulen-Halbschalen bezeichnet werden, werden mit Bezug auf die Figuren 1 und 2 erläutert. An einer Innenseite 28 ist als wesentlicher erfindungsgemäßer Bestandteil ein stufenförmiger Anschlag 26 gebildet, wobei die Höhe dieses Anschlags im Bereich der Stirnseite 12 im Wesentlichen der Dicke des Endbereichs 46 der einzulegenden optischen Fasern 40 entspricht. Zum Fixieren des Führungsstücks 20 relativ zum gleichartigen Gegenstück 60 sind als Fixiermittel zwei Zapfen 32 sowie zugehörige Sacklöcher 34 gebildet. Um ein geringfügiges Verschieben des bereits mit dem Gegenstück 60 zusammengesetzten Führungsstücks 20 quer zur Richtung des Anschlags 26 zu ermöglichen, sind die Sacklöcher 34 als Langlöcher mit einer Erstreckungsrichtung quer zur Richtung des Anschlags 26 gebildet. An einer Abgangsseite 14 des Führungsstücks 20 ist ein Aufnahmebereich 36 für einen Knickschutz für die aufzunehmenden optischen Fasern und/oder zur Aufnahme von Klebstoff gebildet. Zur Aufnahme von Klebstoff dient außerdem eine ebenfalls an der Innenseite 28 des Führungsstücks 20 geformte Ausnehmung oder Tasche 38, die, wie aus Fig. 3 ersichtlich, im zusammengebauten Zustand nach außen hin offen ist und in welchem Klebstoff eingefüllt werden kann.

Der Aufnahmebereich 36 geht in einen Absatz 37 über, auf dem, wie in Fig. 2 dargestellt, ein Paar von zu halternden optischen Fasern 40 mit ihrer Ummantelung 42 aufliegen. Der Anschlag 26 verläuft, wie aus den Figuren 1 und 2 ersichtlich, in einem kurzen Bereich hinter der Stirnseite 12 zu dieser senkrecht und parallel zu den Kanten des Führungsstücks 20, dann in Richtung Abgangsseite 14 aber nicht mehr parallel zu den Kanten des Führungsstücks 20, sondern so, dass das durch die Anschläge 26, 66 des Führungsstücks 20 und des Gegenstücks 60 im zusammengebauten Zustand gebildete Führungsvolumen 50 sich in Richtung der Abgangsseite 14, also in Richtung des Aufnahmebereichs 36, öffnet, siehe Figuren 4 und 5.

Auf diese Weise können die Endbereiche 46 der optischen Fasern 40, in denen die äußere und gegebenenfalls die innere Kunststoffummantelung 42 entfernt ist, im Bereich der Stirnseite 12 präzise gehalten werden. Außerdem werden die Kerne der optischen Fasern 40 spannungsarm bis zu dem durch den Absatz 37 gebildeten Auflager geführt.

Fig. 2 zeigt eine Situation mit zwei in das Führungsstück 20, also die untere Ferrulen-Halbschale, eingelegten optischen Fasern 40. Nach dem Aufsetzen des Gegenstücks 60 auf das Führungsstück 20 wird zunächst der in Fig. 4 dargestellte Zustand eingenommen. Anschließend werden die Halbschalen, also das Führungsstück 20 und das Gegenstück 60, gegeneinander verschoben, bis der in Fig. 5 gezeigte Zustand erreicht ist. Die Innenflächen 28, 68 des Führungsstücks 20 und des Gegenstücks 60 liegen dabei aneinander an. Die Endbereiche 46 der optischen Faser 40 werden dann durch die Anschläge 26, 66 zusammengedrückt und in definierter Position gehalten.

Bereits vorher oder jedenfalls zu diesem Zeitpunkt wird Klebstoff zwischen die Halbschalen, beispielsweise in die Taschen 38 eingebracht. Durch geeignetes Belichten mit UV-Licht härtet der Kleber sehr rasch, innerhalb einiger Sekunden, aus und das Führungsstück 20 und das Gegenstück 60 sind fest miteinander verbunden und die optischen Fasern 40 sind im Führungsvolumen 50 positioniert. Anschließend wird die Konfektionierung des Glasfaserendes fertiggestellt durch Abschleifen der Stirnseite 12 sowie von überstehenden Endbereichen 46 der optischen Fasern 40. Hierzu wird die gesamte Ferrule, also der gesamte Ummantelungskörper eingespannt. Insgesamt wird hierdurch eine hervorragende Präzision und eine bestimmte optische Qualität erzielt und die Endbereiche 46 der optischen Fasern 40 stehen sehr gut senkrecht zur Stirnfläche 12 des Ummantelungskörpers 30 und liegen außerdem parallel zu den Flächen 24, 64 und den Kanten 22, 62 der Ferrulen-Halbschalen.

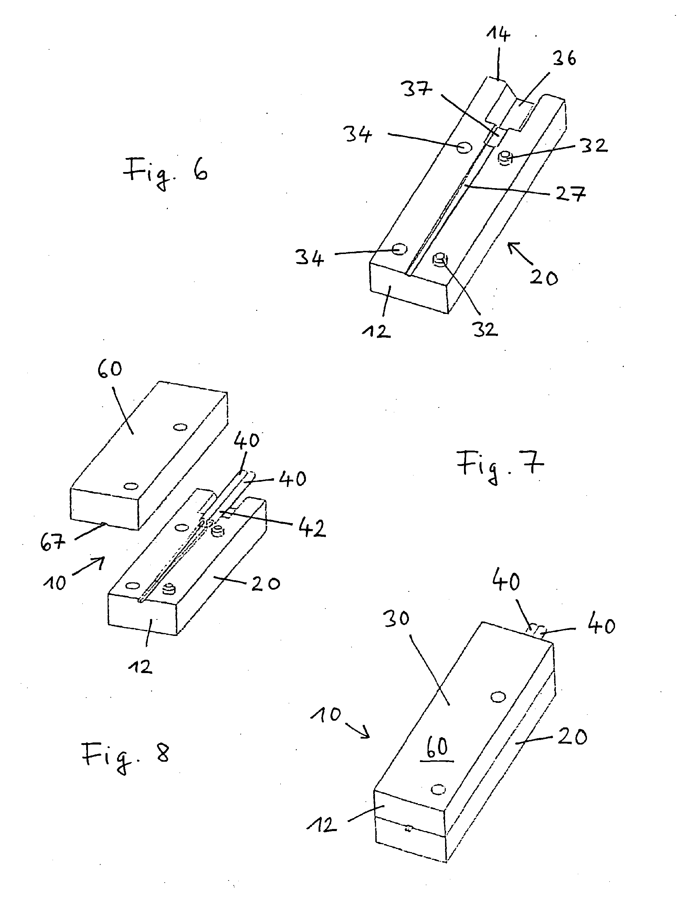

Ein alternatives Ausführungsbeispiel, das Kein Teil der Erfindung ist, ist in den Figuren 6 bis 8 gezeigt. Äquivalente Komponenten sind hierbei mit denselben Bezugszeichen wie in den Figuren 1 bis 5 versehen.

Der wesentliche Unterschied dieser Variante im Vergleich zur, in den Figuren 1 bis 5 gezeigten Erfindung besteht in der Außenkontur und Form des Führungsstücks 20 und des entsprechenden Gegenstücks 60, bei denen es sich auch hier um identische Komponenten handelt und die im zusammengebauten Zustand, siehe Fig. 8, im Wesentlichen eine Quaderform bilden. Weiterhin ist bei dem in den Figuren 6 bis 8 gezeigten Beispiel ein nut- oder kanalförmiger Anschlag 27, 67 gebildet. Entsprechend dem vorstehend beschriebenen Führungsvolumen 50 öffnet sich dieser Kanal in der Ebene in Richtung zum Aufnahmebereich 36 an der Abgangsseite des Führungsstücks 20 und wird auch etwas tiefer, damit die optischen Fasern 40 mit ihrer Kunststoffummantelung 42 im Bereich des Absatzes 37, der auch hier als Auflager wirkt, angeordnet werden können.

Mit der vorliegenden Erfindung wird ein neuartiges Anschlussteil zur Konfektionierung von Glasfasern bereitgestellt, welches erhebliche Vereinfachungen und Verbesserungen bei der Konfektionierung von Glasfasern bietet. Besonders wichtige Vorteile sind die präzise Positionierung der gehalterten Glasfaserenden relativ zu einer Außenkontur des Anschlussteils und weiterhin die kostengünstige und rasche Fertigung aus transparenten Kunststoffteilen.

## Patentansprüche

1. Anschlussteil für mindestens eine optische Faser
mit einem Ummantelungskörper (30), in welchem ein Endbereich (46) einer optischen Faser (40) oder Endbereiche (46) mehrerer optischer Fasern (40) aufnehmbar sind,
wobei der Ummantelungskörper (30) mehrteilig gebildet ist,
wobei der Ummantelungskörper (30) zumindest ein Führungsstück (20) und ein Gegenstück (60) jeweils mit einem Anschlag (26, 66) aufweist und
wobei der Endbereich (46) der optischen Faser (40) oder die Endbereiche (46) der optischen Fasern (40) im zusammengebauten Zustand des Ummantelungskörpers (30) mit dem Gegenstück (60) relativ zum Führungsstück (20) in definierter Position fixierbar sind,
**dadurch gekennzeichnet,**
**dass** das Führungsstück (20) und das Gegenstück (60) identische Bauteile sind und
**dass** der Anschlag (26) des Führungsstücks (20) und der Anschlag (66) des Gegenstücks (60) stufenförmig gebildet sind, wobei eine Höhe des stufenförmigen Anschlags (26, 66) im Bereich einer Stirnseite (12) des Ummantelungskörpers (30) etwa einer Dicke des Endbereichs (46) der aufzunehmenden optischen Faser (40) bzw. etwa einer Dicke der Endbereiche (46) der aufzunehmender optischen Fasern (40) entspricht, so dass der Endbereich der optischen Faser bzw. die Endbereiche der optischen Fasern stramm zwischen dem Führungsstück und dem Gegenstück sitzt bzw. sitzen

2. Anschlussteil nach Anspruch 1,
**dadurch gekennzeichnet,**
**dass** das Führungsstück (20) und das Gegenstück (60) Fixiermittel zum wechselseitigen Fixieren aufweisen.

3. Anschlussteil nach Anspruch 2,
**dadurch gekennzeichnet,**
**dass** die Fixiermittel Mittel zum wechselseitigen formschlüssigen Eingriff sind.

4. Anschlussteil nach Anspruch 2 oder 3,
**dadurch gekennzeichnet,**
**dass** die Fixiermittel als Zapfen (32) und Sacklöcher (34) gebildet sind.

5. Anschlussteil nach einem der Ansprüche 1 bis 4,
**dadurch gekennzeichnet,**
**dass** das Führungsstück (20) und das Gegenstück (60) aus Kunststoff gebildet ist.

6. Anschlussteil nach Anspruch 5,
**dadurch gekennzeichnet,**
**dass** das Führungsstück (20) und das Gegenstück (60) aus transparentem Kunststoff, insbesondere aus MABS, gebildet ist.

7. Anschlussteil nach einem der Ansprüche 1 bis 6,
**dadurch gekennzeichnet,**
**dass** im zusammengebauten Zustand des Ummantelungskörpers (30) durch den Anschlag des Führungsstücks (20) und das Gegenstück (60) ein Führungsvolumen (50) begrenzt wird, in dem eine optische Faser (40) oder mehrere optische Fasern (40) aufgenommen ist bzw. sind.

8. Anschlussteil nach Anspruch 7,
**dadurch gekennzeichnet,**
**dass** sich das Führungsvolumen (50) in Richtung der Stirnseite (12) des Ummantelngskörpers (30) verjüngt.

9. Anschlussteil nach einem der Ansprüche 1 bis 8,
**dadurch gekennzeichnet,**
**dass** das Führungsstück (20) und das Gegenstück (60) an einer Abgangsseite (14) einen Aufnahmebereich (36) zum Aufnehmen von Klebstoff und/oder eines Knickschutzes für die optische Faser (40) oder die optischen Fasern (40) aufweist.

10. Anschlussteil nach einem der Ansprüche 1 bis 9,
**dadurch gekennzeichnet,**
**dass** an einer Außenseite des Führungsstücks (20) und des Gegenstücks (60) Konturierungen gebildet sind.

11. Anschlussteil nach Anspruch 10,
**dadurch gekennzeichnet,**
**dass** die Konturierung mindestens eine Kante (22, 62) oder eine Fläche (24, 64) aufweist.

12. Anschlussteil nach Anspruch 11,
**dadurch gekennzeichnet,**
**dass** die mindestens eine Kante (22, 62) der Konturierung so gebildet ist, dass die optische Faser (40) oder die optischen Fasern (40) im zusammengebauten Zustand parallel zur Kante (22) liegt bzw. liegen.

13. Anschlussteil nach einem der Ansprüche 1 bis 12,
**dadurch gekennzeichnet,**
**dass** eine Außenkontur des Ummantelungskörpers (30) eine Zylinderform aufweist.

14. Anschlussteil nach einem der Ansprüche 1 bis 13,
welches zur Aufnahme genau einer optischen Faser (40) oder zur Aufnahme von genau zwei optischen Fasern (40) ausgelegt ist.

## Claims

1. A connector for at least one optical fiber,
comprising a sheathing member (30) in which an end region (46) of an optical fiber (40) or end regions (46) of a plurality of optical fibers (40) can be accommodated, which sheathing member (30) is a multi-part component and said sheathing member (30) has at least one guide block (20) and a counterpart (60) each equipped with a stop member (26, 66),
and the end region (46) of said optical fiber (40) or the end regions (46) of said optical fibers (40) is/are capable of being fixed in a defined position relative to said guide block (20) in the assembled state of said sheathing member (30) and said counterpart (60),
**characterized in that**
said guide block (20) and said counterpart (60) are identical components and said stop member (26) on said guide block (20) and said stop member (66) on said counterpart (60) are step-shaped, a height of said step-shaped stop member (26, 66) in the region of an end face (12) of said sheathing member (30) is approximately equal to a thickness of the end region (46) of said optical fiber (40) to be accommodated or is approximately equal to a thickness of the end regions (46) of said optical fibers to be accommodated (40) such that the end region of said optical fiber or the end regions of said optical fibers is/are held tightly between said guide block and said counterpart.

2. The connector as defined in claim 1
**characterized in that**
said guide block (20) and said counterpart (60) each have locating means for mutual positioning.

3. The connector as defined in claim 2,
**characterized in that**
said locating means are means for effecting mutual positive engagement.

4. The connector as defined in claim 2 or claim 3,
**characterized in that**
said locating means are in the form of pins (32) and blind holes (34).

5. The connector as defined in any one of claims 1 to 4,
**characterized in that**
said guide block (20) and said counterpart (60) are made of plastics material.

6. The connector as defined in claim 5,
**characterized in that**
said guide block (20) and said counterpart (60) are made of transparent plastics material, more particularly of MABS.

7. The connector as defined in any one of claims 1 to 6,
**characterized in that**,
in the assembled state of said sheathing member (30), said stop member of said guide block (20) and said counterpart (60) delimit a guiding space (50) in which one optical fiber (40) or a plurality of optical fibers (40) can be accommodated.

8. The connector as defined in claim 7,
**characterized in that**
said guiding space (50) is tapered toward the end face (12) of said sheathing member (30).

9. The connector as defined in any one of claims 1 to 8,
**characterized in that**
said guide block (20) and said counterpart (60) have at an outlet end (14) an accommodation area (36) for the accommodation of an adhesive and/or an anti-kink element for said optical fiber(s) (40).

10. The connector as defined in any one of claims 1 to 9,
**characterized in that**
a profile is provided on the external surface of said guide block (20) and of said counterpart (60).

11. The connector as defined in claim 10,
**characterized in that**
said profile comprises at least one edge (22, 62) or at least one surface (24, 64).

12. The connector as defined in claim 11,
**characterized in that**
said at least one edge (22 62) of said profile is formed such that said optical fiber(s) (40) is/are parallel to said edge (22) in the assembled state.

13. The connector as defined in any one of claims 1 to 12,
**characterized in that**
the external surface of said sheathing member (30) has a cylindrical shape.

14. The connector as defined in any one of claims 1 to 13,
adapted to accommodate precisely one optical fiber (40) or to accommodate precisely two optical fibers (40).

## Revendications

1. Élément de raccordement pour au moins une fibre optique avec un corps (30) d'enveloppe dans lequel peuvent se loger une portion d'extrémité (46) d'une fibre optique (40) ou des portions d'extrémité (46) de plusieurs fibres optiques (40),
dans lequel le corps (30) d'enveloppe est formé de plusieurs parties,
dans lequel le corps (30) d'enveloppe comprend au moins une partie de guidage (20) et une contrepartie (60) chacune avec une butée (26, 66), et
dans lequel la portion d'extrémité (46) de la fibre optique (40) ou les portions d'extrémité (46) des fibres optiques (40) peuvent être fixées, à l'état assemblé du corps (30) d'enveloppe, avec la contrepartie (60), en une position définie par rapport à la partie de guidage (20),
***caractérisé***
***en ce que*** la partie de guidage (20) et la contrepartie (60) sont des composants identiques, et
***en ce que*** la butée (26) de la partie de guidage (20) et la butée (66) de la contrepartie (60) sont formées en gradin, une hauteur de la butée (26, 66) en gradin correspondant, au niveau d'une face frontale (12) du corps (30) d'enveloppe, approximativement à une épaisseur de la portion d'extrémité (46) de la fibre optique (40) devant être reçue, ou bien approximativement à une épaisseur des portions d'extrémité (46) des fibres optiques (40) devant être reçues, de telle sorte que la portion d'extrémité de la fibre optique ou les portions d'extrémité des fibres optiques se place(nt) de manière rigide entre la partie de guidage et la contrepartie.

2. Élément de raccordement selon la revendication 1,
***caractérisé***
***en ce que*** la partie de guidage (20) et la contrepartie (60) comprennent des moyens de fixation pour une fixation mutuelle.

3. Élément de raccordement selon la revendication 2,
***caractérisé***
***en ce que*** les moyens de fixation sont des moyens de prise mutuelle par engagement positif.

4. Élément de raccordement selon la revendication 2 ou 3,
***caractérisé***
***en ce que*** les moyens de fixation sont conformés en tenon (32) et trou borgne (34).

5. Élément de raccordement selon l'une quelconque des revendications 1 à 4,
***caractérisé***
***en ce que*** la partie de guidage (20) et la contrepartie (60) sont réalisées en matière plastique.

6. Élément de raccordement selon la revendication 5,
***caractérisé en***
***ce que*** la partie de guidage (20) et la contrepartie (60) sont réalisées dans une matière plastique transparente, en particulier du MABS.

7. Élément de raccordement selon l'une quelconque des revendications 1 à 6,
***caractérisé***
***en ce qu'***à l'état assemblé du corps (30) d'enveloppe, la butée de la partie de guidage (20) et la contrepartie (60) délimitent un volume de guidage (50) dans lequel une fibre optique (40) ou plusieurs fibres optiques (40) est/sont logée(s).

8. Élément de raccordement selon la revendication 7,
***caractérisé***
***en ce que*** le volume de guidage (50) est effilé dans la direction de la face frontale (12) du corps (30) d'enveloppe.

9. Élément de raccordement selon l'une quelconque des revendications 1 à 8,
***caractérisé***
***en ce que*** la partie de guidage (20) et la contrepartie (60) comprennent, sur une face (14) de sortie, une zone (36) de réception destinée à recevoir de l'adhésif et/ou une protection anti-pliage pour la fibre optique (40) ou les fibres optiques (40).

10. Élément de raccordement selon l'une quelconque des revendications 1 à 9,
***caractérisé***
***en ce que*** des contours sont formés sur une face extérieure de la partie de guidage (20) et de la contrepartie (60).

11. Élément de raccordement selon la revendication 10,
***caractérisé***
***en ce que*** le contour comprend au moins une arête (22, 62) ou une surface (24, 64).

12. Élément de raccordement selon la revendication 11,
***caractérisé***
***en* ce *que*** ladite au moins une arête (22, 62) du contour est formée de telle manière que la fibre optique (40) ou les fibres optiques (40) est/sont située(s) à l'état assemblé parallèlement à l'arête (22).

13. Élément de raccordement selon l'une quelconque des revendications 1 à 12,
***caractérisé***
***en ce qu*'**un contour extérieur du corps (30) d'enveloppe présente une forme cylindrique.

14. Élément de raccordement selon l'une quelconque des revendications 1 à 13, qui est conçu pour recevoir exactement une fibre optique (40) ou pour recevoir exactement deux fibres optiques (40).
